# NEUE EUROPÄISCHE PATENTSCHRIFT

(11) **EP 2 495 434 B2**
(45) Veröffentlichungstag und Bekanntmachung des Hinweises auf die Entscheidung über den Einspruch: **04.10.2017**
(45) Hinweis auf die Patenterteilung: 07.05.2014
(21) Anmeldenummer: 11001767.0
(22) Anmeldetag: 03.03.2011
(51) Int. Cl.: F03D 7/00, H04B 10/00

(54) **System zur Überwachung des Zustands von Rotorblättern an Windernergieanlagen**
System for monitoring the status of rotor blades on wind energy facilities
Système de surveillance de l'état de pales de rotor sur des éoliennes

(43) Veröffentlichungstag der Anmeldung: 05.09.2012
(73) Patentinhaber: Fraunhofer-Gesellschaft zur Förderung der angewandten Forschung e.V., 80686 München (DE)
(72) Erfinder: Frankenstein, Bernd, Dipl.-Ing., 01457 Ullersdorf (DE); Weihnacht, Bianca, Dr., 01309 Dresden (DE); Rieske, Ralf, Dr., 01129 Dresden (DE); Fischer, Daniel, 01099 Dresden (DE)
(74) Vertreter: Pfenning, Meinig & Partner mbB

(56) Entgegenhaltungen:
- WO-A2-2010/136151
- DE-A1- 10 065 314
- "LED circuit", , 30. Oktober 2010 (2010-10-30), XP55017701, Gefunden im Internet: URL:http://web.archive.org/web/20101106033 755/http://en.wikipedia.org/wiki/LEDs_as_P hotodiode_Light_Sensors#LED_as_light_senso r [gefunden am 2012-01-26]

## Beschreibung

Die Erfindung betrifft ein System zur Überwachung des Zustands von Rotorblättern an Windenergieanlagen.

Bei herkömmlichen Überwachungssystemen für Windenergieanlagen werden lediglich Komponenten des Antriebes, wie Pumpen, Motore, Getriebe und die Schwingungen des Turmes überwacht. Erste Ansätze der Überwachung von Rotorblättern auf Schäden sind in der nicht vorveröffentlichten Patentanmeldung PCT/DE2010/001087 beschrieben. Dementsprechend sollen mit modellbasierten Verfahren mit einem an einem Rotorblatt angebrachten Sensor- und Aktornetzwerk oder mit einer Netzwerkanordnung von Ultraschallwandlern global am Rotorblatt auftretende Rotorblatteigenschwingungen und lokale geführte elastische Wellen permanent zeit- und ortsaufgelöst detektiert werden. Zusätzlich sollen periodisch in vorgebbaren Zeitabständen geführte elastische Wellen, die von jeweils einem Aktor oder Ultraschallwandler emittiert und von Sensoren oder Ultraschallwandlern detektiert und dabei auf Veränderungen der emittierten Wellen untersucht werden.

Eine Überwachung von insbesondere sehr großen Windenergieanlagen, wie sie beispielsweise in off-shore Windparks mit Rotorblattlängen > 50 m eingesetzt werden, wird dabei immer interessanter und es ist dabei erforderlich, die Überwachung zumindest nahezu permanent und zerstörungsfrei durchzuführen, um aufgetretene Schäden, wie Brüche, Risse oder Delaminationen, zeitnah und mit ausreichender Sicherheit zu detektieren. Eine Reparatur oder ein Austausch von geschädigten Rotorblättern kann dann mit ausreichender Sicherheit erfolgen und ein Austausch auf Verdacht, wie dies im Moment häufig der Fall ist, kann vermieden werden.

Ein für eine solche Überwachung eingesetztes Netzwerk weist über die gesamte Fläche des Rotorblatts verteilt angeordnete Sensoren auf, die mit Elektroenergie versorgt werden und von denen die erfassten Messsignale weitergeleitet werden müssen. Dies erfolgt aber über metallische Leiter, in der Regel Kupferdrähte oder -kabel.

Daraus resultieren aber mehrere Nachteile. Zum einen erhöht sich dadurch die Eigenmasse eines so bestückten Rotorblatts in Folge der hohen Eigenmasse des Kupfers mit der Isolation. Zum anderen bereiten mögliche Blitzeinschläge Probleme, da durch so hervorgerufene elektrische Induktionsspannungen im kV-Bereich neben Schäden unmittelbar am Rotorblatt auch Schäden an elektrischen Komponenten der Windenergieanlage auftreten können. Die Wahrscheinlichkeit von Blitzeinschlägen in solche Rotorblätter ist wegen der Baugröße und den üblicherweise gewählten freien Standorten für Windenergieanlagen sehr groß.

Die negative Beeinflussung durch Blitzeinschläge kann lediglich durch große Leiterquerschnitte und den Einsatz einer entsprechend geschirmten äußeren Isolation berücksichtigt werden. Dies führt aber zu einer Erhöhung der Masse eines Überwachungssystems und der Kosten. Problematisch kann auch die reduzierte Datenübertragungsrate durch metallische Leiter sein.

So gibt es Ansätze, die Energieversorgung und die Übertragung von Messdaten optisch zu realisieren. So wird beispielsweise in GB 2 165 712 A vorgeschlagen, elektromagnetische Strahlung von einer LED durch eine Lichtleitfaser auf Detektoren zu richten, die die Energie in elektrische Spannung umwandeln. Hierfür können photovoltaische Zellen eingesetzt werden.

Bei der in Rede stehenden Anwendung für eine Überwachung des Zustands von Rotorblättern müssen aber eine große Anzahl von Sensoren, die über die große Fläche des Rotorblatts verteilt angeordnet sind, ausreichend mit Elektroenergie versorgt werden und die mit den Sensoren erfassten Messsignale sicher für eine Auswertung übertragen werden können. Die große erforderliche Anzahl an Sensoren ist für eine hohe Ortsauflösung und wegen der Dämpfung von Schwingungen oder Wellen im Material erforderlich.

So offenbart WO 2010/136151 A2 ein Rotorblatt für eine Energieerzeugungsanlage mit den Merkmalen des Oberbegriffs des Hauptanspruchs.

Die DE 100 65 314 A1 betrifft eine Einrichtung zur Überwachung des Zustands von Rotorblättern mit an/in Rotorblättern befindlichen Sensoren. Dabei kann auch mindestens ein Erreger (Aktor) vorhanden sein.

Es ist daher Aufgabe der Erfindung, ein System zur Überwachung von Rotorblättern zur Verfügung zu stellen, bei dem äußere Einflüsse durch elektrische Felder oder Blitzeinschläge vermieden werden können und dabei ein sicherer Betrieb mit dafür geringer erforderlicher Energie erreicht werden kann.

Erfindungsgemäß wird diese Aufgabe mit einem System, das die Merkmale des Anspruchs 1 aufweist, gelöst. Vorteilhafte Weiterbildungen und Ausgestaltungen der Erfindung können mit untergeordneten Ansprüchen bezeichneten Merkmalen realisiert werden.

Bei dem erfindungsgemäßen System zur Überwachung des Zustands von Rotorblättern an Windenergieanlagen sind mehrere Sensorknoten an einem Rotorblatt befestigt oder im Rotorblatt integriert. Sie können mehr oder weniger gleich über die Fläche oder innerhalb des Volumens des jeweiligen Rotorblatts verteilt angeordnet sein. Die Dichte der Anordnung von Sensorknoten kann in kritischen Bereichen, die höheren Belastungen ausgesetzt oder die konstruktiv kritisch sind, erhöht sein, so dass dort der Abstand zwischen den Sensorknoten kleiner als in unkritischen Bereichen sein kann.

An den einzelnen Sensorknoten ist jeweils mindestens ein Sensor zur ortsaufgelösten Erfassung von Schwingungen und/oder akustischen Wellen des Rotorblatts vorhanden. Bei den Sensoren kann es sich um piezoelektrische Elemente bzw. Ultraschallwandler handeln, die bereits bei herkömmlichen Systemen eingesetzt werden. Die Sensorknoten sind über Lichtleitfasern mit einer zentralen Versorgungs- und Empfangseinheit verbunden. Bei größeren Systemen können aber auch zwei oder mehrere solcher Versorgungs- und Empfangssysteme für ein Rotorblatt vorgesehen werden, die dann aber jeweils mit einer Mehrzahl von Sensorknoten über Lichtleitfasern verbunden sind.

An der zentralen Versorgungs- und Empfangseinheit ist eine Lichtquelle vorhanden, von der elektromagnetische Strahlung über eine Lichtleitfaser zu einem photovoltaischen Konverter der Sensorknoten, mit dem die empfangene elektromagnetische Strahlung in elektrische Energie umgewandelt wird, geführt ist und die elektrische Energie für den Betrieb einer sensornahen Elektronik und einer Lichtquelle oder einem optischen Modulator genutzt werden kann. Mittels der sensornahen Elektronik werden die mit dem jeweiligen Sensor erfassten Messsignale zu an der zentralen Versorgungs- und Empfangseinheit vorhandenen optischen Detektoren über Lichtleitfasern übertragen. Dabei sollte gesichert sein, dass die örtliche Zuordnung der Messsignale zum jeweiligen Sensorknoten möglich ist.

Die Energie der elektromagnetischen Strahlung, die von der Lichtquelle, der Versorgungs- und Empfangseinheit in eine Lichtleitfaser eingekoppelt wird, wird dann auf photovoltaische Konverter von Sensorknoten gerichtet und darin in elektrische Energie umgewandelt. Diese Energie kann dann zur Erfassung, Bearbeitung und die Übermittlung von Messsignalen, die mit einem Sensor des jeweiligen Sensorknotens erfasst worden sind, genutzt werden. Hierfür kann die sensornahe Elektronik eines Sensorknotens genutzt werden, die mit einem Analog-Digital-Wandler und/oder einem Mikroprozessor und/oder einem Taktgeber und/oder einer Treiberschaltung für die Lichtquelle oder einen optischen Modulator gebildet sein kann. Dort kann auch ein zusätzliches Elektroenergiespeicherelement (Kondensator, Akkumulator) vorhanden sein, um einen stabileren Betrieb oder auch Zustände mit erhöhtem Energiebedarf zu ermöglichen. Ein erhöhter Energiebedarf entsteht beispielsweise dann, wenn nicht nur eine passive Analyse mit mit Sensoren erfassten Messsignalen durchgeführt werden soll, sondern auch aktiv Schwingungen und/oder akustische Wellen in ein Rotorblatt eingekoppelt werden sollen, die dann wiederum mit anderen Sensoren von in einem Abstand zu dem entsprechend aktiv betriebenen Sensorknoten angeordnet sind, detektiert werden können. Ein solcher aktiv betreibbarer Sensorknoten ist mit einem Sensor/Aktuator versehen, der sowohl aktiv mittels angelegter gepulster oder elektrischer Wechselspannung Schwingungen und/oder akustische Wellen in ein Rotorblatt einkoppeln bzw. Schwingungen des Rotorblatts anregen kann, wie auch passiv in anderer Form hervorgerufene Schwingungen und/oder akustische Wellen des Rotorblatts detektieren kann. Der aktive und passive Betrieb sollte dabei alternierend durchgeführt werden.

Vorteilhaft ist es, als Lichtquellen eine Laserlichtquelle mit Vertikalresonator (VCSEL) einzusetzen. Dies betrifft sowohl die Lichtquelle der zentralen Versorgungs- und Empfangseinheit, wie auch Lichtquellen der Sensorknoten, da diese Lichtquellen sehr effektiv betrieben werden können und insbesondere eine hohe Zuverlässigkeit aufweisen und der erforderliche Raumbedarf sowie die Eigenmasse klein sind. Als ein optischer Modulator kann ein Mach-Zehnder-Modulator an Sensorknoten eingesetzt werden.

Bei der Erfindung besteht die Möglichkeit, die elektromagnetische Strahlung von der zentralen Versorgungs- und Empfangseinheit zu Sensorknoten über gesonderte Lichtleitfasern zu richten und für die Übertragung der Messsignale von Sensoren andere Lichtleitfasern einzusetzen.

Die von den Lichtquellen der zentralen Versorgungs- und Empfangseinheit und der Lichtquellen von Sensorknoten oder den optischen Modulatoren emittierte elektromagnetische Strahlung kann aber auch zumindest teilweise über eine gemeinsame Lichtleitfaser geführt werden. Hierfür kann dann elektromagnetische Strahlung mit unterschiedlichen Wellenlängen, die von den unterschiedlichen Lichtquellen emittiert, modulierte elektromagnetische Strahlung eingesetzt oder ein alternierender Betrieb der Lichtquellen durchgeführt werden.

Die Lichtquelle einer zentralen Versorgungs- und Empfangseinheit kann kontinuierlich für eine kontinuierliche Energieversorgung von Sensorknoten betrieben werden. Es ist aber zumindest teilweise auch ein gepulster Betrieb möglich. Dabei können Steuersignale zu Sensorknoten, bevorzugt in codierter Form übermittelt werden. Dies kann beispielsweise für einen aktiven Betrieb von Sensorknoten, mit denen Schwingungen und/oder akustische Wellen in das Rotorblatt eingekoppelt werden sollen, genutzt werden. Nach Empfang einer definierten Pulsfolge kann dann mittels des Mikroprozessors elektrische Spannung dem jeweiligen Sensor/Aktuator (Ultraschallwandler) mit entsprechender Frequenz zugeführt werden. Die in einem geeigneten Abstand zu diesem Sensorknoten angeordneten Sensorknoten, die die emittierten Schwingungen und/oder die akustischen Wellen dieses Sensorknotens detektieren, können ebenfalls mit einer entsprechend codierten Pulsfolge in diesen Empfangsmodus geschaltet werden, so dass die Erfassung so angeregter Schwingungen und/oder akustischen Wellen diesen Sensorknoten bekannt ist.

Für einen passiven und einen aktiven Betrieb eines erfindungsgemäßen Systems sollte an mindestens jedem vierten Sensorknoten ein Sensor/Aktuator vorhanden sein. Dabei können dann maximal drei lediglich passiv betriebene und einen Sensor aufweisende bzw. nur als Sensor betriebene Sensorknoten um einen aktiv betreibbaren Sensorknoten, mit bekanntem Abstand zu diesem, angeordnet sein. So kann durch die Bestimmung der Laufzeiten von Wellen/Schwingungen bei bekanntem Abstand der Sensorknoten zueinander und der Dämpfung des Rotorblattmaterials im jeweiligen Überwachungsbereich dieser Sensorknoten eine ortsaufgelöste Überwachung an Rotorblättern durchgeführt werden.

Als photovoltaischen Konverter in den Sensorknoten können bevorzugt photovoltaische Elemente, insbesondere GaAs- oder Si-PIN-Photodioden eingesetzt werden, da diese einen hohen Wirkungsgrad bei der Energieumwandlung erreichen und klein dimensioniert sind sowie eine geringe Eigenmasse aufweisen.

Für einen effektiven Betrieb und eine kleine Baugröße können eine Lichtquelle eines Sensorknotens und ein photovoltaischer Konverter als ein hybrid aufgebautes optoelektronisches Element ausgebildet sein. Dadurch kann der Aufwand für die Übertragung von Strahlung und Signalen verringert werden.

Bei dem erfindungsgemäßen System können zwischen den Sensorknoten und der Versorgungs- und Empfangseinheit optische Koppelelemente, an die Lichtleitfasern angeschlossen sind, und über die eine Verteilung der von den Lichtquellen emittierten elektromagnetischen Strahlung zu den Sensorknoten und von den Sensorknoten zu den optischen Detektoren der zentralen Versorgungs- und Empfangseinheit möglich ist, vorhanden sein.

Um eine Beschädigung von Lichtquellen der Sensorknoten zu vermeiden, ist ein optisches Filter zwischen der Austrittsfläche der Lichtquelle von Sensorknoten und der jeweiligen Lichtleitfaser angeordnet , das lediglich für die Wellenlänge bzw. des Wellenlängenspektrums der von dieser Lichtquelle emittierten elektromagnetischen Strahlung transparent ist. Das Filter kann als Bandpass-, Kanten- oder Interferenzfilter ausgebildet sein.

Mit einem erfindungsgemäßen System besteht die Möglichkeit Daten und Energie rein optisch zu übertragen, was zumindest auf kritische Bereiche an Rotorblättern zutrifft. Es kann so eine vollständige galvanische Entkopplung zwischen den über das Volumen und die Fläche der Rotorblätter verteilt angeordneten Sensorknoten und der zentralen Versorgungs- und Empfangseinheit erreicht werden. Die empfindlichen elektronischen Komponenten sind so geschützt und auch gegen Blitzeinschlag gesichert. Wegen des kleinen erforderlichen Energiebedarfs (je Sensorknoten ca. 100 mW) ist auch eine wirtschaftliche Überwachung möglich. Die Lebensdauer von Rotorblättern kann besser ausgenutzt und Stillstandzeiten von Windenergieanlagen für Wartung und Reparatur verkürzt werden.

Nachfolgend soll die Erfindung beispielhaft näher erläutert werden.

Dabei zeigen:
Figur 1 in schematischer Form ein Beispiel eines erfindungsgemäßen Systems;
Figur 2 in schematischer Form ein Beispiel für eine zentrale Versorgungs- und Empfangseinheit;
Figur 3 ein Blockschaltbild für eine sensornahe Elektronik für bei der Erfindung einsetzbare Sensorknoten;
Figur 4 in schematischer Form ein weiteres Beispiel eines erfindungsgemäßen Systems;
Figur 5 in schematischer Form ein drittes Beispiel eines erfindungsgemäßen Systems;
Figur 6 in schematischer Form ein viertes Beispiel eines erfindungsgemäßen Systems und
Figur 7 eine schematische Darstellung eines hybrid aufgebauten optoelektronischen Elements, das bei der Erfindung eingesetzt werden kann.

Bei den nachfolgend zu beschreibenden Beispielen von erfindungsgemäßen Systemen sind in den entsprechenden Figuren lediglich zwei Sensorknoten S1 und S2 aus Übersichtlichkeitsgründen gezeigt. Es können aber deutlich mehr solcher Sensorknoten an eine zentrale Versorgungs- und Empfangseinheit 4 angeschlossen sein. Im Übrigen werden gleiche Elemente mit denselben Bezugszeichen gekennzeichnet.

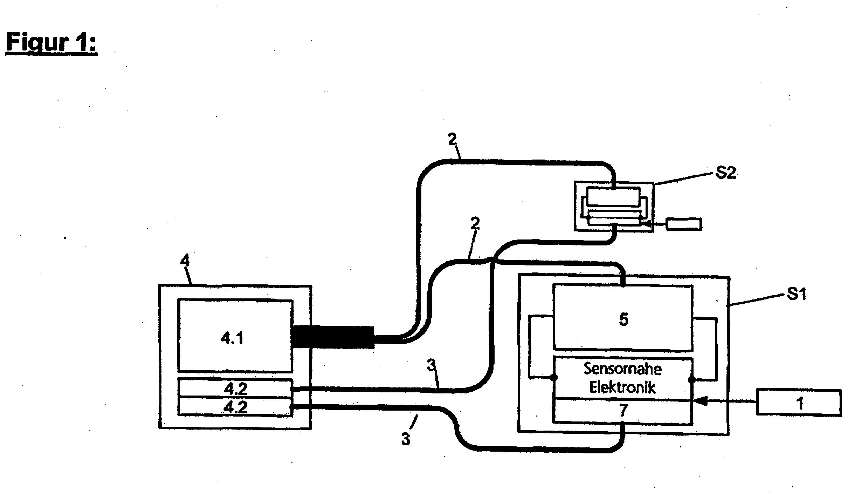

Bei dem in Figur 1 gezeigten Beispiel eines erfindungsgemäßen Systems ist an einer zentralen Versorgungs- und Empfangseinheit 4 eine Laserdiode mit Vertikalresonator, als leistungsstarke Lichtquelle 4.1 vorhanden von der die emittierte monochromatische elektromagnetische Strahlung mit einer Wellenlänge von 808 nm über Lichtleitfasern 2 zu den Sensorknoten S1 und S2 geführt ist.

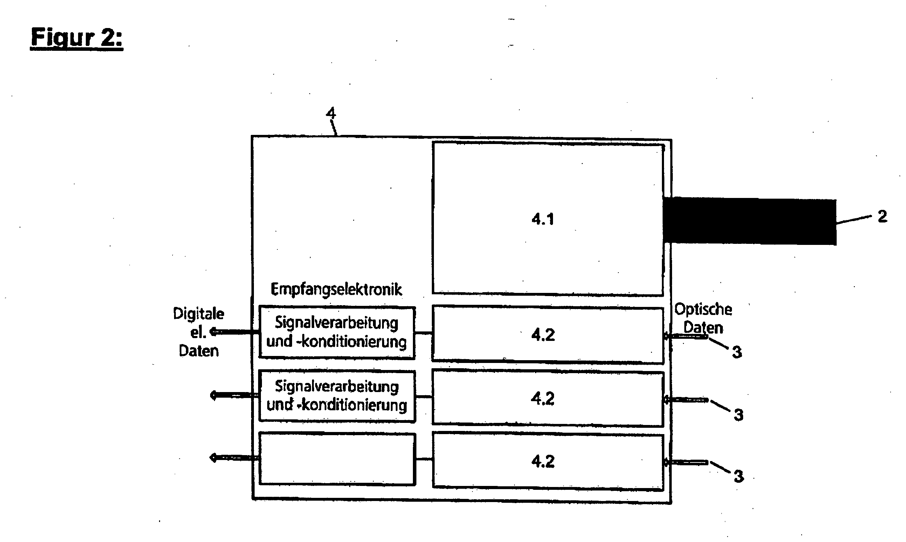

An der zentralen Versorgungs- und Empfangseinheit 4 sind mehrere optische Detektoren 4.2 (PIN-Photodioden) vorhanden, zu denen Messsignale der Sensorknoten S1, S2,.........Sn über Lichtleitfasern 3 optisch übertragen werden. Diese wandeln die optisch übertragenen Messsignale in äquivalente elektrische Signale um. In der zentralen Versorgungs- und Empfangseinheit sind weiter rauscharme elektrische Verstärker 4.3 zur Verstärkung der Ausgangssignale der optischen Detektoren 4.2, Filter 4.4 zur Verbesserung des Signal-Rauschverhältnisses und Entscheiderschaltkreise 4.5 für eine Amplitudenregeneration (alles nicht dargestellt) vorhanden (s. Figur 2).

An den Sensorknoten S1 und S2 sind ein photovoltaischer Konverter 5 (GaAs- oder Si-Photozelle) vorhanden auf den die von der Lichtquelle 4.1 emittierte Strahlung mittels der Lichtleitfasern 2 gerichtet ist. Mit der mittels des photovoltaischen Konverters 5 umgewandelten elektrischen Spannung werden die sensornahe Elektronik und die Lichtquelle 7 des jeweiligen Sensorknotens S1, S2,..........Sn betrieben. Wenn ein Sensorknoten aktiv betrieben wird, kann auch der Sensor/Aktuator 1 (piezoelektrischer Wandler, Ultraschallwandler) des Sensorknotens mit elektrischer Spannung versorgt werden.

Auch die Lichtquellen 7 der Sensorknoten S1, S2,.........Sn können Laser (VCSEL) sein, die elektromagnetische Strahlung emittieren.

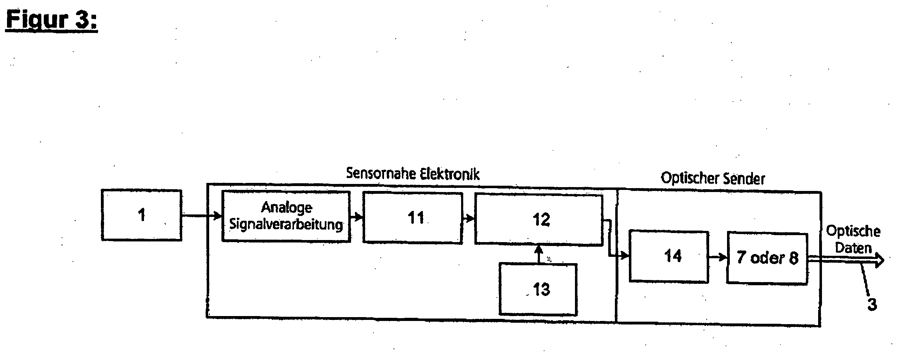

In der sensornahen Elektronik ist außerdem ein Analog-Digital-Wandler 11, mit dem die mit dem Sensor 1 erfassten und über ein Analogteil geführten Messsignale, digitalisiert werden. Die digitalisierten Messsignale werden dem Mikroprozessor 12 zugeführt, an dem ein Taktgeber 13 angeschlossen ist. Die Messsignalübertragung erfolgt vom Mikroprozessor 12 über eine Treiberschaltung 14 zur Lichtquelle 7, von der die Messsignale über die Lichtleitfaser 3 zu einem optischen Detektor 4.2, der zentralen Versorgungs- und Empfangseinheit 4 übermittelt werden (s. Figur 3). Für den Betrieb der sensornahen Elektronik ist lediglich eine Leistung von 100 mW erforderlich.

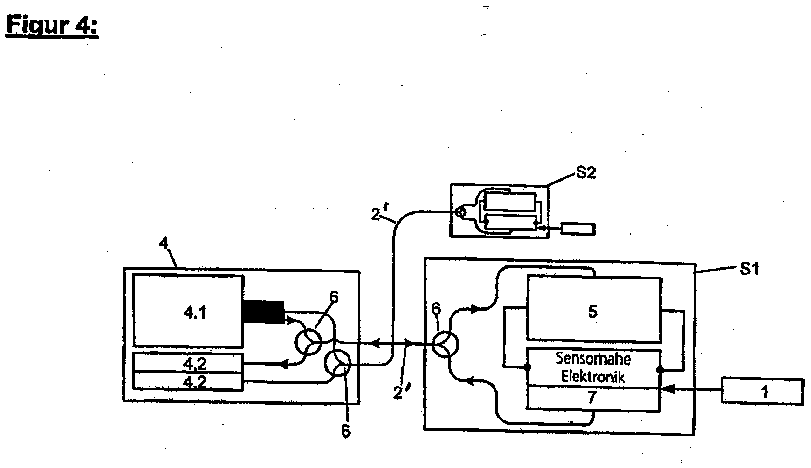

Bei dem in Figur 4 gezeigten Beispiel eines erfindungsgemäßen Systems werden die elektromagnetische Strahlung, die von der Lichtquelle 4.1 emittiert wird und die optischen Messsignale von den Lichtquellen 7 der Sensorknoten S1, S2,..........Sn über eine Lichtleitfaser 2' geführt. Es sind lediglich optische Koppelelemente 6 (Schmelzkoppler, Zirkulatoren, optische Verzweiger, z.B. auf Basis von planaren Lichtwellenleitern) vorhanden, mit denen eine Verteilung der jeweiligen elektromagnetischen Strahlung zu den Sensorknoten S1, S2,.........Sn und zu den optischen Detektoren 4.2 der zentralen Versorgungs- und Empfangseinheit 4, erfolgt. Alle anderen Elemente können so ausgeführt sein, wie dies beim Beispiel nach Figur 1 der Fall ist. Die Messsignale der einzelnen Sensorknoten S1, S2,........... Sn können dabei codiert (moduliert) sein, um eine Zuordnung zu dem jeweiligen Sensorknoten zu ermöglichen. Dies kann unter Nutzung der Treiberschaltung 14 und/oder des Mikroprozessors 12 erreicht werden.

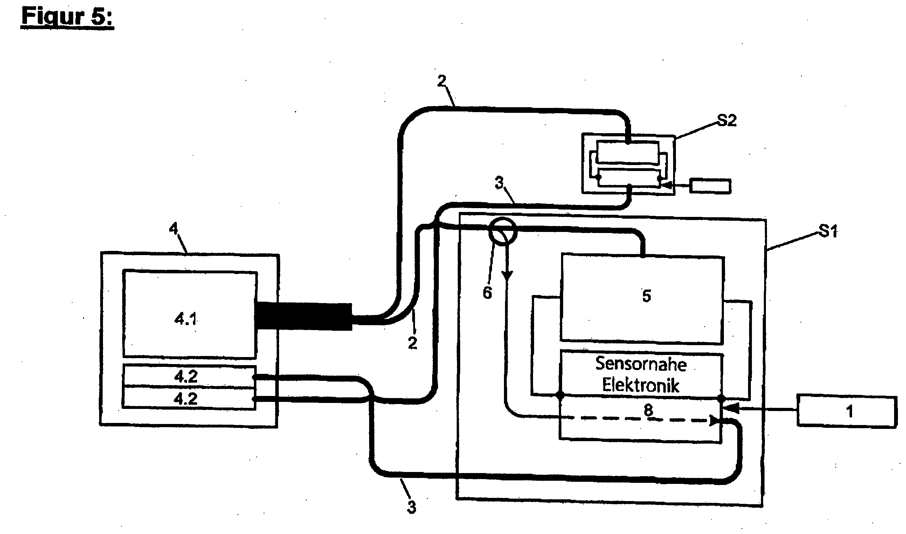

Bei dem in Figur 5 gezeigten Beispiel ist an Stelle der Lichtquelle 7 ein optischer Modulator 8 an Sensorknoten S1, S2,............Sn vorhanden. Es wird dabei ein Bruchteil der von der Lichtquelle 4.1 emittierten elektromagnetischen Strahlung mit einem optischen Koppler abgezweigt und mit dem optischen Modulator 8 unter Nutzung der vom Mikroprozessor 12 beeinflussten Treiberschaltung 14 unter Berücksichtigung der digitalisierten Messsignale in der Intensität moduliert. Die modulierten Messsignale werden in separate Lichtleitfasern 3 eingekoppelt und zu den optischen Detektoren 4.2 geführt. Als optischer Modulator 8 kann ein Mach-Zehnder-Modulator auf Basis planarer Lichtwellenleiter eingesetzt werden.

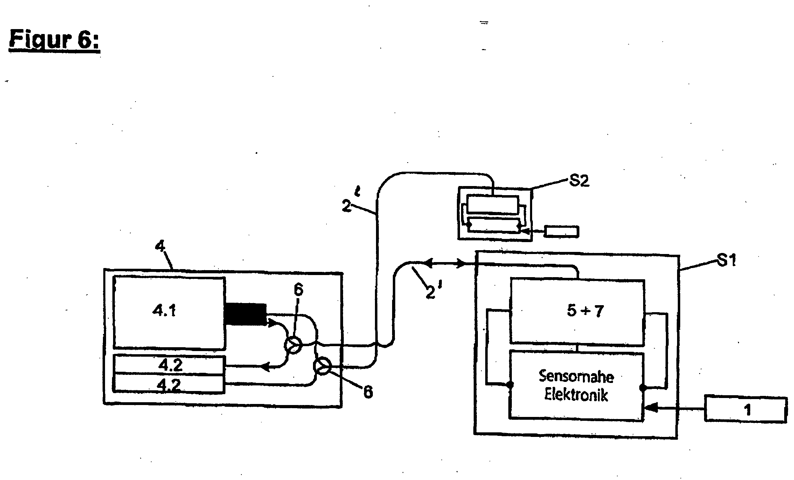

Bei dem in Figur 6 gezeigten Beispiel sind bei Sensorknoten S1, S2,..............Sn der photovoltaische Konverter 5 und die Lichtquelle 7 (VCSEL) gemeinsam als hybrid aufgebautes optoelektronisches Bauelement ausgebildet. Die elektromagnetische Strahlung, die von den Lichtquellen 4.1 und 7 emittiert wird, kann wieder von bzw. zu einem Sensorknoten S1, S2,.......Sn über eine gemeinsame Lichtleitfaser 2' geführt werden, wie dies beim Beispiel nach Figur 4 bereits erläutert worden ist.

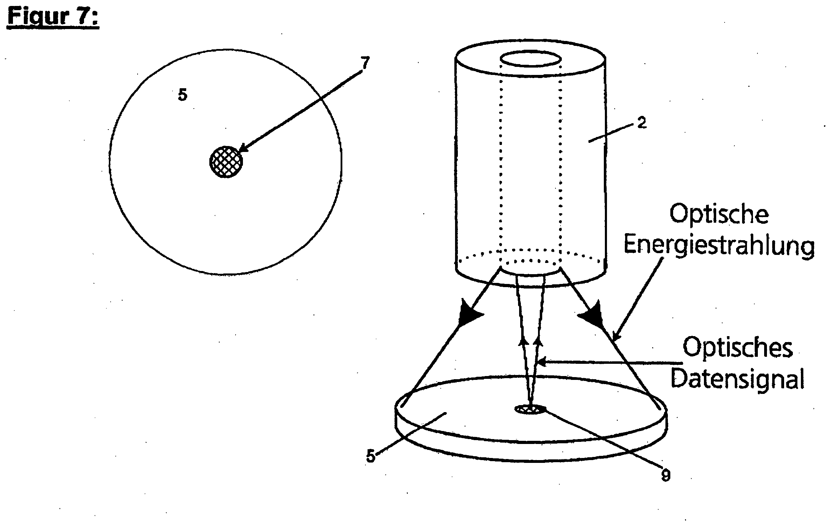

An der Austrittsfläche der Lichtquelle 7 ist ein optisches Filter 9 angeordnet, das nur für die von der Lichtquelle 7 emittierte elektromagnetische Strahlung transparent ist. Mit dem Filter 9 kann die Lichtquelle 7 vor der von der Lichtquelle 4.1, der zentralen Versorgungs- und Empfangseinheit 4, emittierten elektromagnetischen Strahlung geschützt werden. Das Filter 9 kann ein Interferenzfilter sein, das außer der elektromagnetischen Strahlung der Lichtquelle 7 alle anderen Wellenlängen reflektiert oder absorbiert. Dieser Aufbau ist in Figur 7 gezeigt.

## Patentansprüche

1. System zur Überwachung des Zustands von Rotorblättern an Windenergieanlagen, bei dem mehrere Sensorknoten (S1, S2,...Sn) an einem Rotorblatt befestigt oder im Rotorblatt integriert sind, wobei an den Sensorknoten jeweils mindestens ein Sensor (1) zur ortsaufgelösten Erfassung von Schwingungen und/oder akustischen Wellen des Rotorblatts vorhanden ist und die Sensorknoten (S1, S2,....Sn) über Lichtleitfasern (2, 3) mit einer zentralen Versorgungs- und Empfangseinheit (4) verbunden sind,
dabei an der zentralen Versorgungs- und Empfangseinheit (4) eine Lichtquelle (4.1) vorhanden ist, von der elektromagnetische Strahlung über eine Lichtleitfaser (2) zu einem photovoltaischem Konverter (5), mit dem die empfangene elektromagnetische Strahlung in elektrische Energie umgewandelt wird, geführt ist und die elektrische Energie für den Betrieb einer sensornahen Elektronik und einer Lichtquelle (7) oder einem optischen Modulator (8) nutzbar ist, mit der die mit dem Sensor (1) erfassten Messsignale zu an der zentralen Versorgungs- und Empfangseinheit (4) vorhandenen optischen Detektoren (4.2) über Lichtleitfasern (2, 2', 3) übertragbar sind;
an mindestens einem der Sensorknoten (S1, S2,....Sn) ein Sensor/Aktuator vorhanden ist, mit dem Schwingungen des Rotorblatts und/oder akustische Wellen im Rotorblatt erfasst und mit dem Schwingungen und/oder akustische Wellen im Rotorblatt angeregt werden können und
Steuersignale von der Lichtquelle (4.1) über Lichtleitfasern (2, 2', 3) zu Sensorknoten (S1, S2,...Sn) zu deren aktivem Betrieb übertragbar sind,
**dadurch gekennzeichnet, dass**
ein optisches Filter (9) zwischen der Austrittsfläche der Lichtquelle (7) der Sensorknoten (S1, S2,....Sn) und der Lichtleitfaser (2, 2' oder 3) angeordnet ist.

2. System nach Anspruch 1, **dadurch gekennzeichnet, dass** die sensornahe Elektronik (6) eines Sensorknotens (S1, S2, ....Sn) mit einem Analog-Digital-Wandler (11) und/oder einem Mikroprozessor (12) und/oder einem Taktgeber (13) und/oder einer Treiberschaltung (14) für die Lichtquelle (7) oder den optischen Modulator (8) gebildet ist.

3. System nach einem der vorhergehenden Ansprüche, **dadurch gekennzeichnet, dass** die Lichtquelle(n) (4.1 und/oder 7) eine Laserlichtquelle mit Vertikalresonator (VCSEL) ist/sind und ein optischer Modulator (8) ein Mach-Zehnder-Modulator ist.

4. System nach einem der vorhergehenden Ansprüche, **dadurch gekennzeichnet, dass** die von den Lichtquellen (4.1 und 7) oder den optischen Modulator (8) emittierte elektromagnetische Strahlung über eine gemeinsame Lichtleitfaser (2') geführt ist.

5. System nach einem der vorhergehenden Ansprüche, **dadurch gekennzeichnet, dass** die photovoltaischen Konverter (5) in den Sensorknoten (S1, S2,....Sn) photovoltaische Elemente, insbesondere GaAs-Zellen oder Si-PIN-Photodioden sind.

6. System nach einem der vorhergehenden Ansprüche, **dadurch gekennzeichnet, dass** die Sensoren (1) und/oder die Sensoren/Aktuatoren piezoelektrische Elemente sind.

7. System nach einem der vorhergehenden Ansprüche, **dadurch gekennzeichnet, dass** eine Lichtquelle (7) und ein optischer Konverter (5) ein hybrid aufgebautes optoelektronisches Element bilden.

8. System nach einem der vorhergehenden Ansprüche, **dadurch gekennzeichnet, dass** an mindestens jedem vierten Sensorknoten (S1, S2,....Sn) ein Sensor/Aktuator (1) vorhanden ist.

9. System nach einem der vorhergehenden Ansprüche, **dadurch gekennzeichnet, dass** zwischen den Sensorknoten (S1, S2,....Sn) und der Versorgungs- und Empfangseinheit (4) ein optisches Koppelelement, an das Lichtleitfasern (2, 2', 3) angeschlossen sind, angeordnet ist.

## Claims

1. A system for monitoring the condition of rotor blades on wind energy plants, in which a plurality of sensor nodes (S1, S2,...Sn) are fastened to a rotor blade or are integrated in the rotor blade, wherein in each case at least one sensor (1) for the spatially resolved detection of vibrations and/or acoustic waves of the rotor blade is present at the sensor nodes, and the sensor nodes (S1, S2,....Sn) are connected via optical fibres (2, 3) to a central supply and reception unit (4),
wherein a light source (4.1) is present at the central supply and reception unit (4), from which source electromagnetic radiation is guided via an optical fibre (2) to a photovoltaic converter (5) with which the received electromagnetic radiation is converted into electrical energy, and the electrical energy can be used for operating electronics close to the sensor and a light source (7) or an optical modulator (8), with which the measurement signals detected with the sensor (1) can be transmitted to optical detectors (4.2) present at the central supply and reception unit (4) via optical fibres (2, 2', 3);
a sensor/actuator is present at at least one of the sensor nodes (S1, S2,.... Sn), with which sensor/actuator vibrations of the rotor blade and/or acoustic waves in the rotor blade can be detected, and with which vibrations and/or acoustic waves can be excited in the rotor blade and
control signals can be transmitted from the light source (4.1) via optical fibres (2, 2', 3) to sensor nodes (S1, S2,....Sn) for their active operation,
**characterized in that**
an optical filter (9) is arranged between the exit surface of the light source (7) of the sensor nodes (S1, S2,....Sn) and the optical fibre (2, 2' or 3).

2. A system according to Claim 1, **characterised in that** the electronics (6) close to the sensor of a sensor node (S1, S2, ....Sn) are formed with an analog-to-digital converter (11) and/or a microprocessor (12) and/or a clock generator (13) and/or a driver circuit (14) for the light source (7) or the optical modulator (8).

3. A system according to one of the preceding claims, **characterised in that** the light source(s) (4.1 and/or 7) is/are a laser light source with a vertical resonator (VCSEL) and an optical modulator (8) is a Mach-Zehnder modulator.

4. A system according to one of the preceding claims, **characterised in that** the electromagnetic radiation emitted by the light sources (4.1 and 7) or the optical modulator (8) is guided via a common optical fibre (2').

5. A system according to one of the preceding claims, **characterised in that** the photovoltaic converters (5) in the sensor nodes (S1, S2,....Sn) are photovoltaic elements, in particular GaAs cells or Si PIN photodiodes.

6. A system according to one of the preceding claims, **characterised in that** the sensors (1) and/or the sensors/actuators are piezoelectric elements.

7. A system according to one of the preceding claims, **characterised in that** a light source (7) and an optical converter (5) form an optoelectronic element of hybrid construction.

8. A system according to one of the preceding claims, **characterised in that** a sensor/actuator (1) is present on at least every fourth sensor node (S1, S2,....Sn).

9. A system according to one of the preceding claims, **characterised in that** an optical coupling element to which optical fibres (2, 2', 3) are connected is arranged between the sensor nodes (S1, S2,....Sn) and the supply and reception unit (4).

## Revendications

1. Système de surveillance de l'état des pales de rotor d'éoliennes, dans lequel plusieurs noeuds capteurs (S1, S2, ... Sn) sont fixés à une pale de rotor ou sont intégrés dans la pale de rotor, au moins un capteur (1) étant prévu les noeuds capteurs pour la détection à résolution locale de vibrations et/ou d'ondes acoustiques de la pale du rotor, et les noeuds capteurs (S1, S2, ... Sn) étant reliés à une unité de distribution et de réception (4) via des fibres optiques (2, 3),
une source lumineuse (4.1) étant prévue au niveau de l'unité de distribution et de réception (4), à partir de laquelle un rayonnement électromagnétique est guidé via une fibre optique (2) vers un convertisseur photovoltaïque (5), par lequel le rayonnement électromagnétique reçu est transformé en énergie électrique, l'énergie électrique pouvant être utilisée pour le fonctionnement d'un dispositif électronique proche du capteur et d'une source lumineuse (7) ou d'un modulateur optique (8), par lequel les signaux de mesure captés par le capteur (1) peuvent être transmis via des fibres optiques (2, 2', 3) vers des détecteurs optiques (4.2), présents sur l'unité de distribution et de réception (4) centrale ;
un capteur/actionneur étant prévu sur un des noeuds capteurs (S1, S2, ... Sn), par lequel les vibrations de la pale de rotor et/ou les ondes acoustiques dans la pale de rotor sont captées et par lequel des vibrations et/ou des ondes acoustiques peuvent être générées dans la pale de rotor et
des signaux de commande pouvant être transmis par la source lumineuse (4.1) via des fibres optiques (2, 2', 3) à des noeuds capteurs (S1, S2, ... Sn) pour leur fonctionnement actif,
**caractérisé en ce que**
un filtre optique (9) est disposé entre la surface de sortie de la source lumineuse (7) des noeuds capteurs (S1, S2,... Sn) et des fibres optiques (2, 2' ou 3).

2. Système selon la revendication 1, **caractérisé en ce que** l'électronique proche des capteurs (6) d'un noeud capteur (S1, S2, ... Sn) est constituée d'un convertisseur analogique-numérique (11) et/ou d'un micro-processeur (12) et/ou d'un générateur d'impulsions (13) et/ou d'un circuit d'excitation (14) pour la source lumineuse (7) ou le modulateur optique (8).

3. Système selon l'une des revendications précédentes, **caractérisé en ce que** la (les) source(s) lumineuse(s) (4.1 et/ou 7) est/sont une source lumineuse laser avec résonateur vertical (VCSEL) et un modulateur optique (8) est un modulateur Mach-Zehnder.

4. Système selon l'une des revendications précédentes, **caractérisé en ce que** le rayonnement électromagnétique émis par les sources lumineuses (4.1 et 7) ou le modulateur optique (8) est guidé par une fibre optique commune (2').

5. Système selon l'une des revendications précédentes, **caractérisé en ce que** les convertisseurs photovoltaïques (5) des noeuds capteurs (S1, S2, ... Sn) sont des éléments photovoltaïques, plus particulièrement des cellules GaAs ou des photodiodes Si-PIN.

6. Système selon l'une des revendications précédentes, **caractérisé en ce que** les capteurs (1) et/ou les capteurs/actionneurs sont des éléments piézoélectriques.

7. Système selon l'une des revendications précédentes, **caractérisé en ce qu'**une source lumineuse (7) et un convertisseur optique (5) forment un élément optoélectronique à structure hybride.

8. Système selon l'une des revendications précédentes, **caractérisé en ce qu'**un capteur/actionneur (1) est présent sur au moins chaque quatrième noeud capteur (S1, S2, ... Sn).

9. Système selon l'une quelconque des revendications précédentes, **caractérisé en ce qu'**un élément de couplage optique, auquel sont raccordées les fibres optiques (2, 2', 3), est disposé entre les noeuds capteurs (S1, S2, ... Sn) et l'unité de distribution et de réception (4).
